## Europäisches Patentamt
## European Patent Office
## Office européen des brevets

(19)

(11) Publication number: **0 004 102**
**B1**

(12) **EUROPEAN PATENT SPECIFICATION**

(45) Date of publication of patent specification: **09.02.83**

(51) Int. Cl.³: **C 09 J 3/14, C 08 L 53/02**

(21) Application number: **79200071.3**

(22) Date of filing: **09.02.79**

(54) **Process for the preparation of a radiation cured adhesive composition.**

(30) Priority: **03.03.78 US 883118**

(43) Date of publication of application:
**19.09.79 Bulletin 79/19**

(45) Publication of the grant of the patent:
**09.02.83 Bulletin 83/6**

(84) Designated Contracting States:
**BE CH DE FR GB IT NL SE**

(56) References cited:
**FR - A - 2 176 877**
**GB - A - 1 002 438**
**US - A - 4 007 311**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Hansen, David Romme**
**15918 Red Willow Drive**
**Houston, Texas 77084 (US)**
Inventor: **St. Clair, David John**
**12810 Hansel**
**Houston, Texas 77024 (US)**

(74) Representative: **Puister, Antonius Tonnis, Mr. et al,**
**P.O. Box 302**
**NL-2501 CH The Hague (NL)**

Courier Press, Leamington Spa, England

# Process for the preparation of a radiation cured adhesive composition

Thermoplastic elastomeric block copolymers have been proposed in the past to produce adhesive compositions, for example U.S.P. 3,239,478 discloses combinations of these block copolymers with tackifying resins and paraffinic extending oils. Limitations of these adhesive compositions are their relatively low service temperatures and their poor solvent resistance and for a number of applications it would be advantageous to have higher service and better solvent resistance temperatures. For example, these adhesives would be useful in paint shops if the masking tapes produced had good solvent resistance and a 105—120°C service temperature. They would also be useful as laminating adhesives in food pouches if they could withstand boiling water temperatures and as furniture laminating adhesives if they could bear moderate loads at 120°C.

One means to improve the service temperature of block copolymer adhesive compositions is to chemically cure the adhesive with a phenol formaldehyde resin and heat as disclosed in U.S.P. 3,625,752. However, this procedure is undesirable because it is a very energy intensive process to heat the adhesive. Also, this process cannot be used for curing pressure sensitive tapes because the plastic backing film would melt at the temperature required for curing. A more energy efficient process is the radiation cure disclosed in U.S.P. 2,956,904. The compositions disclosed therein, however, do not contain a supplemental crosslink promoting ingredient and therefore higher radiation doses are required. French A. 2176877 discloses elastomeric rubbery compositions comprising 10—50 pbw of a rubbery constituent, 5—60 pbw of an unsaturated polyester, 5—50 pbw of a cross-linking agent and 5—75 pbw of a plastifying agent. These compositions are liquid at ambient temperature in order to facilitate casting or moulding and they can be solidified by cross-linking. The cross-linking action can be initiated or promoted by heating, by means of a catalyst or by exposure to radiation.

The present invention provides a process for preparing an adhesive composition comprising an unsaturated polymerizable agent and a thermoplastic elastomeric block copolymer having at least two monoalkenyl-aromatic polymer end blocks A and at least one elastomeric conjugated diene mid block B, said block A comprising from 8 to 55% by weight of the block copolymer, which composition is cured by radiation, characterized in that a composition is prepared which comprises 100 parts by weight of block copolymer, from 25 to 250 parts by weight of an adhesion promoting resin compatible with block B and from 1 to 50 parts by weight of a di-, tri-, or tetrafunctional ester of acrylic or methacrylic acid and an at least dihydric aliphatic alcohol, which composition is cured by radiation in order to achieve an STL value of at least 205°C, STL being defined as the maximum temperature at which a tape can be rapidly peeled from a hot, stainless steel substrate without leaving an adhesive residue on the panel.

The block copolymers employed in the present composition are thermoplastic elastomers and have at least two monoalkenyl aromatic polymer end blocks A and at least one elastomeric conjugated diene polymer mid block B. The number of blocks in the block copolymer is not of special importance and the macromolecular configuration may be linear, graft, radial or star depending upon the method by which the block copolymer is formed Typical block copolymers of the most simple configuration would have the structure polystyrene-polyisoprene-polystyrene and polystyrene-polybutadiene-polystyrene. A typical radial or star polymer would comprise one in which the diene block has three to four branches (radial) or five or more branches (star), the tip of each branch being connected to a polystrene block. Other useful monoalkenyl aromatic compounds from which the thermoplastic (non-elastomeric) blocks may be formed include alphamethyl styrene, tert-butyl styrene and other ring alkylated styrenes as well as mixtures of the same. The conjugated diene monomer preferably has 4 to 5 carbon atoms, such as butadiene and isoprene. A much preferred conjugated diene is isoprene.

The average molecular weights of each of the blocks may be varied as desired. The monoalkenyl-aromatic polymer block preferably have average molecular weights between about 5,000 and 125,000, more preferably between about 7,000 and about 50,000. The elastomeric conjugated diene polymer blocks preferably have average molecular weights between about 15,000 and about 250,000, more preferably between about 25,000 and about 150,000. The average molecular weights of the polystyrene end blocks are determined by gel permeation chromotography, whereas the polystyrene block content of the polymer is measured by infrared spectroscopy of the finished block polymer. The weight percentage of the thermoplastic monoalkenyl aromatic blocks in the finished block polymer should be between 8 and 55%, preferably between 10% and 30% by weight.

The block copolymer by itself lacks the required adhesion. Therefore, it is necessary to add an adhesion promoting or tackifying resin that is compatible with the elastomeric conjugated diene block. A much preferred tackifying resin is a diene-olefin copolymer of piperylene and 2-methyl-2-butene having a softening point of about 95°C. This resin is available commercially under the tradename Wingtack 95, and is prepared by the cationic polymerization of 60% piperylene, 10% isoprene, 5% cyclopentadiene, 15% 2-methyl butene and about 10% dimer, as disclosed in U.S.P 3,577,398. Other tackifying resins of the same general type may be employed in which the resinous copolymer comprises 20—80 weight percent of piperylene and 80—20 weight percent of 2-methyl-2-butene. The resins normally have softening points (ring and ball) between about 80°C and about 115°C. Other adhesion promoting resins which may be employed include hydrogenated resins, esters of rosins, polyterpenes, terpenephenol resins, and, polymerized mixed olefins.

The amount of tackifying resin employed varies from 25 to 200, preferably between 50 to 150 parts by weight per 100 parts of block copolymer.

The adhesive compositions of the invention also may contain plasticizers such as rubber extending or compounding oils or liquid resins. These rubber compounding oils are well-known in the art and include both high saturates content and high aromatics content oils. The amount of rubber compounding oil employed varies from 0 to 100, preferably from 10 to 60 parts by weight per 100 parts of block copolymer.

An essential component of the present invention is the acrylate or methacrylate ester coupling agent which promotes cross-linking of the block copolymer during exposure to the radiation. The coupling agents employed herein are di-, tri-, and tetra-functional acrylic and methacrylic esters of an at least dihydric aliphatic alcohol.

Preferred esters are at least tri-functional esters of an at least trihydric alcohol. Of this group the tetracrylic or tetramethacrylic esters of pentaerythritol and the triacrylic or trimethacrylic esters of trimethylolpropane are particularly preferred.

Other suitable esters are diesters derived from di-, tri-, tetra or polyethylene glycol, 1,6 hexanediol, 1,4-butanediol, bisphenol A ethoxylated bisphenol A, and 1,3-(2,2-dimethyl)-propanediol.

The amount of coupling agent employed varies from 1 to 50, preferably from 2 to 25 parts by weight per 100 parts of blockcopolymer.

The compositions of this invention may be modified with supplementary materials including pigments and fillers, as well as stabilizers and oxidation inhibitors.

The adhesive compositions of the present invention may be applied to the substrate from a solution of up to about 40% weight solids of the ingredients in a solvent such as toluene, the solvent being removed by evaporation prior to curing by exposure to the radiation. Alternatively, the ingredients may be mixed in a solvent, the mixture may be emulsified and the solvent evaporated, and the adhesive may be applied to the substrate as a 60—70% weight solids water-based emulsion, the water being removed by evaporation prior to curing. Adhesives of the present invention are especially suited for preparation as hot melt adhesives.

The compositions of the present invention have been cured by exposure to high energy radiation such as electron beam radiation or ultraviolet radiation, with electron beam being particularly preferred.

The electron beam radiation or high energy ionizing radiation which is employed to effect the cross-linking reaction can be obtained from any suitable source such as an atomic pile, a resonant transformer accelerator, a Van de Graaff electron accelerator, an electron accelerator, a betatron, a synchrotron, or a cyclotron. Radiation from these sources will produce ionizing radiation such as electrons, protrons, neutrons, deuterons, gamma rays, X rays, alpha particles, and beta particles.

The curing reaction is conveniently effected at room temperature, but it can be conducted at lower or higher temperatures if so desired. Preferably, the curing is effected in an inert atmosphere to reduce oxidative degradation of the block copolymer.

The amount of radiation required depends primarily upon the type and concentration of acrylate or methacrylate ester employed and the level of curing desired. Suitable doses of electron beam radiation include 1 Mrad to 20 Mrads, preferably 2 Mrads to 10 Mrads. Suitable UV radiation doses are those received by a 0.04 mm thick adhesive passing under a medium pressure mercury lamp rated at 200 watts per 2.5 cm at line speeds of about 3 to about 24 m per minute, the preferred range being 7.5 to 12 m per minute.

When using ultraviolet radiation it is preferred to employ a photosensitizer in order to speed up the curing reaction. Useful photosensitizers are benzophenone, propiophenone, cyclopropyl phenyl ketone, acetophenone, 1.3.5-triacetyl benzene, benzaldehyde, thioxanthane, anthraquinone, beta-naphthyl phenyl ketone, beta-naphthaldehyde, beta-acetonaphthone, 2.3-pentanedione, benzil, fluoronone, pyrene, benzanthrone, and anthracene. While most of these are well-known photosensitizers, other photosensitizers would work equally well in the present invention.

A preferred use of the present formulation is in the preparation of pressure-sensitive adhesive tapes or in the manufacture of labels. The pressure-sensitive adhesive tape comprises a flexible backing sheet and a layer of the adhesive composition of the present invention coated on one major surface of the backing sheet. The backing sheet may be a plastic film, paper or any other suitable material and the tape may include various other layers or coatings, such as primers, release coatings and the like, which are used in the manufacture of pressure-sensitive adhesive tapes.

The invention is further illustrated by means of the following Examples.

In these Examples the high temperature cohesive strength of the irradiated adhesive compositions was measured by a Strippability Temperature Limit (STL) test. STL is defined as the maximum temperature at which a tape can be rapidly peeled from a hot, stainless steel substrate without leaving an adhesive residue on the panel. The test is run by applying a 6 mm wide strip of tape to a stainless steel panel whose temperature is controlled to give a temperature gradient of about 6.5°C per cm between 37 and 230°C. Following a 30 second warm-up, the tape is stripped off manually at high speed and at approximately a 90° angle. The temperature at which cohesive failure occurs is recorded as the STL value. The STL test measures whether an automotive masking tape can be removed cleanly when it is stripped from a painted car as it leaves the paint baking ovens. Solvent resistance is determined by immersing about 6 cm² tape in toluene for 24 hours at room temperature. If the adhesive dissolves, solvent resistance is poor. If it only swells, solvent resistance is good.

In all examples, the adhesive composition was prepared in a toluene solution and applied as about a 0.04 mm dry adhesive layer to a 0.025 mm thermoplastic film substrate. Electron beam irradiation was accomplished using a 450 mm wide ELECTROCURTAIN® PROCESSOR manufactured by Energy Sciences, Inc. Ultraviolet irradiation was accomplished using a UV Processor (QC 1202 N/A) supplied by Radiation Polymer Co. This unit has two medium pressure mercury lamps, each rated at 200 watts per 2.5 cm.

The adhesive compositions used in Examples 1—4 are shown in Table 1. The polystyrene-polyisoprene-polystyrene block copolymers tested were Shell's KRATON® 1107 Rubber, a linear (Styrene-isoprene)₂ polymer, Phillips' Solprene 421, a radial (Styrene-isoprene)₄ polymer and an experimental star (Styrene-isoprene)₈ polymer. All three polymers had about the same molecular weights prior to coupling and all three contain 15%w polystyrene blocks. The polystyrene-polybutadiene-polystyrene polymer tested was Shell's KRATON 1102 Rubber, a linear (Styrenebutadiene)₂ polymer of 30%w polystyrene. The adhesion promoting tackifying resins used with the polymers were Wingtack 95 Resin, a diene-olefin resin, and Hercules' XPS 502 Resin, a modified terpene hydrocarbon resin, respectively. The plasticizer used was SHELLFLEX® 371, a low aromatic content process oil. The stabilizer used was zinc dibutyldithiocarbamate (ZDBC).

TABLE I
Formulations cured with Electron Beam Radiation

| Formulation (pbw) | A | B | C | D | ·E | F | · G | H | I |
|---|---|---|---|---|---|---|---|---|---|
| **Polymer** | | | | | | | | | |
| KRATON® 1107 | 100 | 100 | 100 | 100 | 100 | | | | 100 |
| KRATON® 1102 | | | | | | 100 | | | |
| Solprene 421 | | | | | | | 100 | | |
| Experimental Star | | | | | | | | 100 | |
| **Resin** | | | | | | | | | |
| Wingtack 95 | 80 | 80 | 80 | 80 | 80 | | 80 | 80 | 100 |
| XPS-502 | | | | | | 80 | | | |
| Plasticizer | | | | | | | | | 25 |
| Stabilizer | 2 | 2 | 2 | 2 | | 2 | 2 | 2 | 2 |
| **Ester**[a] | | | | | | | | | |
| TMPTM | Vary | | | | Vary | Vary | Vary | Vary | Vary |
| TMPTA | | Vary | | | | | | | |
| HDODM | | | Vary | | | | | | |
| HDODA | | | | Vary | | | | | |

[a] TMPTM: Trimethylolpropane trimethacrylate
TMPTA: Trimethylolpropane triacrylate
HDODM: 1,6-Hexanediol dimethacrylate
HDODA: 1,6-Hexanediol diacrylate

In Examples 1—4, adhesive compositions were irradiated under a nitrogen blanket with electron beam radiation at doses of 0, 1, 2, 5 and 10 megarads (Mrad). With ELECTROCURTAIN equipment, radiation doses of 1, 2, 5 and 10 Mrad are equivalent to curing line speeds of about 210, 105, 36 and

# 0 004 102

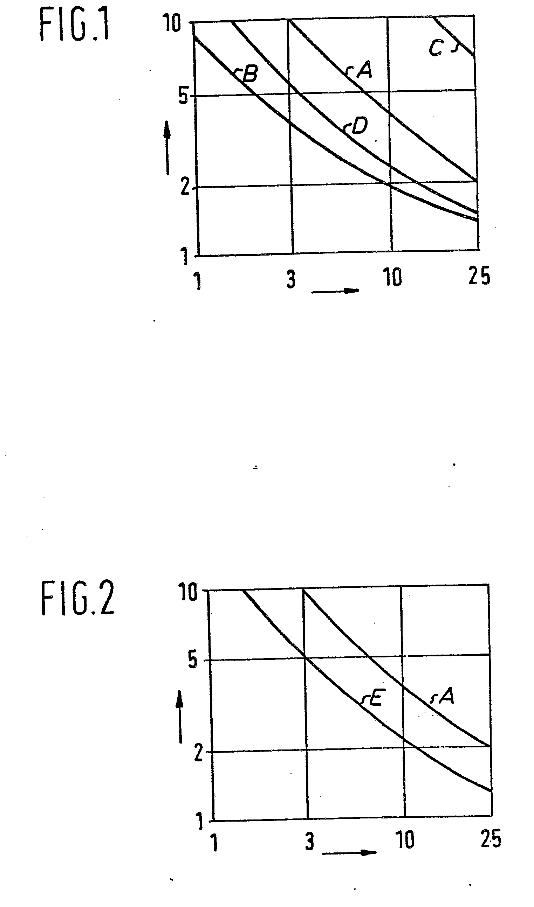

21 m per minute, respectively. Each of the formulations in Table 1 was tested at four levels (1, 3, 10 and 25 parts per 100 parts of block copolymer) of ester coupling agent. In Figures 1—4 the vertical axis represents the radiation dose and on the horizontal axis the ester concentrations at 1, 3, 10 and 25 pbw are indicated. Results are represented in terms of contour diagrams of STL on a grid of radiation dose vs. coupling agent concentration. An STL value of >205°C was considered to indicate a satisfactory degree of curing. Contour lines in Figures 1—4 indicate combinations of radiation dose and coupling agent concentration which give an acceptable degree of curing. To the left of these contour lines, there was little if any improvement in STL and solvent resistance was poor. To the right of these lines, STL was >205°C and the adhesive would not dissolve in toluene.

## Example 1

The effect of the choice of ester coupling agent was determined. Four esters were evaluated for their effectiveness; two difunctional esters: HDODA and HDODM in formulations D and C respectively, and two trifunctional esters TMPTA and TMPTM in formulations B and A respectively. Results in Figure 1 show that both acrylates cure the adhesive more readily than do the methacrylates. That is, a lower radiation dose is required at a given ester concentration or a lower ester concentration is required at a given radiation dose.

## Example 2

The effect of a stabilizer was studied. Results in Figure 2 show that the stabilizer zinc dibutyldithiocarbamate included in formulation A makes curing more difficult, formulation E, with no stabilizer cures easier.

## Example 3

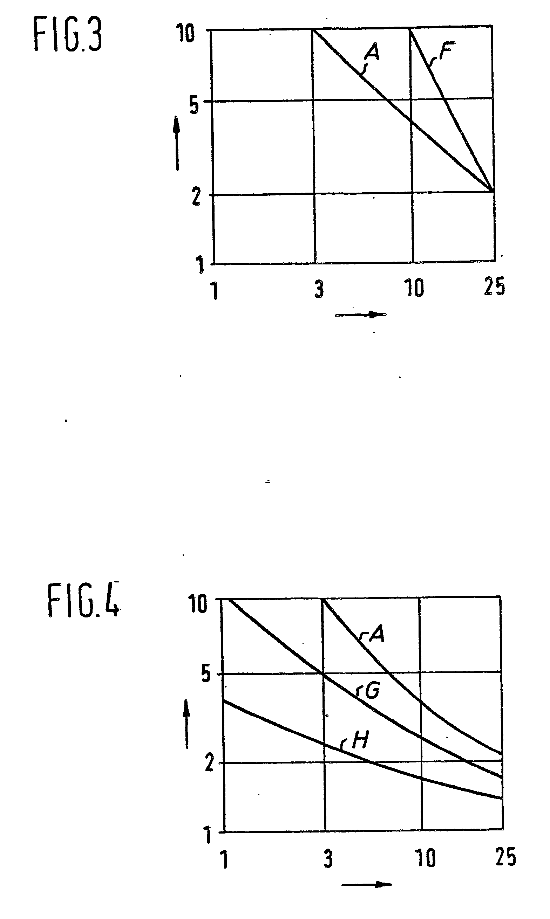

The effect of block polymer structure on the rate of cure was determined. Results in Figure 3 comparing Formulations A and F show that an adhesive based on either a polystyrene-polyisoprene-polystyrene or a polystyrene-polybutadiene-polystyrene block copolymer can be electron cured. Results in Figure 4 comparing Formulations A, G and H which are based on a linear, a radial and a star coupled polymer, respectively, show that as the number of arms on the polymer used increases, the adhesive can be more readily cured.

## Example 4

The effect of including a plasticizer in the ahesive composition was investigated. Curing studies on Formulation I in Table 1 showed that its curing characteristics are the same as those of Formulation A shown in Figure 1. That is, the plasticizer did not appreciably slow down the rate of cure.

## Example 5

The suitability of ultraviolet radiation for initiation of curing was checked. The formulations and results are shown in Table 2. All three formulations, the comparative composition (formulation A) and two compositions of this invention (Formulations B and C), show poor STL and dissolve in toluene before exposure to UV radiation. After exposure to UV radiation, the comparative sample shows some improvement in STL but its solvent resistance remains poor. Formulations B and C, however, show good STL and solvent resistance.

5

TABLE 2
Formulations cured with Ultraviolet Radiation

| Formulation, pbw[a] | A | B | C | |
|---|---|---|---|---|
| KRATON® 1107 Rubber | 100 | 100 | 100 | |
| Wingtack 97 | 80 | 80 | 80 | |
| TMPTM | | 25 | | |
| TMPTA | | | 25 | |
| DEAP | | 3 | | 3 |
| Properties before UV cure | | | | |
| Strippability Temperature-Limit, °C | 110 | 95 | <45 | |
| Solvent Resistance | Poor | Poor | Poor | |
| Properties after UV cure | | | | |
| Strippability Temperature Limit, °C | 155 | >205 | >205 | |
| Solvent Resistance | Poor | Good | Excellent | |

[a] TMPTM: Trimethylolpropane trimethacrylate
TMPTA: Trimethylolpropane triacrylate
DEAP: Diethoxyacetophenane

## Claims

1. A process for preparing an adhesive composition comprising an unsaturated polymerizable agent and a thermoplastic elastomeric block copolymer having at least two monoalkenyl-aromatic polymer end blocks A and at least one elastomeric conjugated diene mid block B, said blocks A comprising from 8 to 55% by weight of the block copolymer, which composition is cured by radiation, characterized in that a composition is prepared which comprises 100 parts by weight of block copolymer, from 25 to 250 parts by weight of an adhesion promoting resin compatible with block B and from 1 to 50 parts by weight of a di-, tri-, or tetrafunctional ester of acrylic or methacrylic acid and an at least dihydric aliphatic alcohol, which composition is cured by radiation in order to achieve an STL value of at least 205°C, STL being defined as the maximum temperature at which a tape can be rapidly peeled from a hot, stainless steel substrate without leaving an adhesive residue on the panel.

2. A process as claimed in claim 1, wherein the block copolymer is a linear polystyrene-polyisoprene-polystyrene block copolymer.

3. A process as claimed in claim 1, wherein the block copolymer is a radial. polystyrene/polyisoprene block copolymer.

4. A process as claimed in claim 1, wherein the block copolymer is a star-shaped polystyrene-polyisoprene block copolymer.

5. A process as claimed in any one of claims 1—4, wherein the ester is an at least trifunctional ester of an at least trihydric alcohol.

6. A process as claimed in claim 5, wherein the ester is the tetra-acrylic or tetra-methacrylic ester of penta-erythritol.

7. A process as claimed in claim 5, wherein the ester is the tri-acrylic or tri-methacrylic ester of trimethylol propane.

## Patentansprüche

1. Verfahren zur Herstellung eines Klebemittels, umfassend ein engesättigtes polymerisierbares Mittel und ein thermoplastisches, elastomeres Blockcopolymer mit mindestens zwei monoalkenylaromatischen Polymerendblöcken A und mindestens einem elastomeren, konjugierten Dienmittelblock B, wobei die Blöcke A 8 bis 55 Gew.-% des Block-copolymers ausmachen und das Mittel durch Strahlung gehärtet wird, dadurch gekennzeichnet, daß man eine Masse Herstellt, umfassend 100 Gew.-Teile Blockcopolymer, 25 bis 250 Gew.-Teile eines die Haftung verstärkenden Mittels, das mit dem Block B verträglich ist, und 1 bis 50 Gew.-Teile eines di-, tri- oder tetrafunktionellen Esters der Acryl- oder Methacrylsäure und einem mindestens zweiwertigen aliphatischen Alkohol, diese Masse durch Strahlung härtet, um einen STL-Wert von mindestens 205°C zu erreichen, wobei STL definiert ist als die maximale Temperatur, bei der ein Band schnell von einem heißen Substrat aus korrosionsbeständigem Stahl abgezogen werden kann, ohne daß ein Klebemittelrest auf dem Substrat verbleibt.

2. Verfahren nach Anspruch 1, bei dem das Blockcopolymer ein lineares Polystyrol/Polyisopren/Polystyrol-Blockcopolymer ist.

3. Verfahren nach Anspruch 1, bei dem das Blockcopolymer ein radiales Polystyrol/Polyisopren-Blockcopolymer ist.

4. Verfahren nach Anspruch 1, bei dem das Blockcopolymer ein sternförmiges Polystyrol/Polyisopren-Blockcopolymer ist.

5. Verfahren nach einem der Ansprüche 1 bis 4, bei dem der Ester ein mindestens dreiwertiger Ester eines zumindest dreiwertigen Alkohols ist.

6. Verfahren nach Anspruch 5, bei dem der Ester der Tetraacryl- oder Tetramethacrylsäure-ester von Penta-erythrit ist.

7. Verfahren nach Anspruch 5, bei dem der Ester der Tri-acryl- oder Tri-methacrylsäure-ester von Trippmethylolpropan ist.

## Revendications

1. Un procédé pour la préparation d'une composition adhésive comprenant un agent polymérisable non saturé et un copolymère séquencé élastomère thermoplastique ayant au moins deux blocs terminaux A de polymère monoalcénylaromatique et au moins un block intermédiaire B de diène conjugué élastomère, le bloc A constituant de 8 à 55 % en poids du copolymère séquencé, laquelle composition est durcie par irradiation, caractérisé en ce qu'on prépare une composition qui comprend 100 parties en poids de copolymère séquencé, de 25 à 250 parties en poids d'une résine favorisant l'adhésion compatible avec le bloc B et de 1 à 50 parties en poids d'un ester di-, tri- ou tétrafonctionnel d'acide acrylique ou méthacrylique et d'au moins un alcool aliphatique dihydrique, laquelle composition est durcie par irradiation de manière que l'on obtienne une valeur de STL d'au moins 205°C, STL étant défini comme la température maximale à laquelle un ruban peut être arraché rapidement d'un substrat d'acier inoxydable chaud sans laisser un résidu d'adhésif sur le panneau.

2. Un procédé selon la revendication 1, dans lequel le copolymère séquencé est un copolymère séquencé linéaire polystyrène-polyisoprène-polystyrène.

3. Un procédé selon la revendication 1, dans lequel le copolymère séquencé est un copolymère séquencé radial polystyrène/polyisoprène.

4. Un procédé selon la revendication 1, dans lequel le copolymère séquencé est un copolymère séquencé en étoile polystyrène/polyisoprène.

5. Un procédé selon l'une quelconque des revendications 1 à 4, dans lequel l'ester est un ester au moins trifonctionnel d'un alcool au moins trihydrique.

6. Un procédé selon la revendication 5, dans lequel l'ester est l'ester tétra-acrylique ou tétraméthacrylique de penta-érythritol.

7. Un procédé selon la revendication 5, dans lequel l'ester est l'ester triacrylique ou triméthacrylique de triméthylolpropane.

FIG.1

FIG.2

**FIG.3**

**FIG.4**